# EUROPEAN PATENT SPECIFICATION

(11) **EP 2 675 000 B1**
(45) Date of publication and mention of the grant of the patent: **04.03.2015**
(21) Application number: 13166347.8
(22) Date of filing: 03.05.2013
(51) Int. Cl.: H01M 2/26, H01M 10/04, H01M 2/30, H01M 10/0525, H01M 10/0585, H01M 10/0587

(54) **Rechargeable battery**
Wiederaufladbare Batterie
Batterie rechargeable

(30) Priority: 11.06.2012 US 201261658195 P; 22.03.2013 US 201313849462
(43) Date of publication of application: 18.12.2013
(73) Proprietor: Samsung SDI Co., Ltd., Yongin-si, Gyeonggi-do (KR); Robert Bosch GmbH, 70442 Stuttgart (DE)
(72) Inventor: Kim, Duk-Jung, Yongin-si, Gyeonggi-do (KR); Moon, Jong-Seok, Yongin-si, Gyeonggi-do (KR)
(74) Representative: Gulde & Partner

(56) References cited:
- WO-A1-2011/099491
- US-A1- 2007 117 009
- US-A1- 2010 227 211

## Description

### BACKGROUND OF THE INVENTION

### Field of the Invention

The present invention relates to a rechargeable battery according to the preamble of claim 1. More particularly, the present invention relates to a rechargeable battery that improves a structure of a current collecting member. Rechargeable batteries are disclosed in US 2010/0227211 A1, US2007/0117009A1 and WO 2011/099491 A1.

### Description of the Related Art

A rechargeable battery can be repeatedly charged and discharged unlike a primary battery that is incapable of being recharged. A rechargeable battery of a low capacity is used for a small portable electronic device such as a mobile phone, a laptop computer, and a camcorder, and a large capacity battery is widely used as a power source for driving a motor of a hybrid vehicle, etc.

Nowadays, a high power rechargeable battery using a non-aqueous electrolyte of a high energy density has been developed, and the high power rechargeable battery is formed as a large capacity rechargeable battery by coupling in series a plurality of rechargeable batteries to use for driving a motor of a device, for example, an electric vehicle requiring large electric power.

Further, a battery module is generally formed with a plurality of rechargeable batteries that are coupled in series, and a rechargeable battery is formed in a cylindrical shape and a square shape.

It is very important that such a battery module has a large capacity in a limited volume. This is because a volume of the battery module has an important influence on a performance of a device in which the battery module is mounted.

Further, when the battery module is mounted in an electric vehicle, continuous vibration and impact are transferred to the battery module and thus the battery module should have a structure strong on a vibration and an impact.

### SUMMARY OF THE INVENTION

The present invention has been made in an effort to provide a rechargeable battery having advantages of improved safety.

This object is achieved for a rechargeable battery mentioned in the beginning by the features of the characterizing part of claim 1.

An exemplary embodiment of the present invention provides a rechargeable battery including: an electrode assembly including a positive electrode and a negative electrode, a case that houses the electrode assembly, a terminal that is protruded to the outside of the case, and a current collecting member that electrically connects the electrode assembly and the terminal, wherein an extension that is bonded to the current collecting member is formed in the electrode assembly, and the extension is bent to intersect a front surface of the electrode assembly.

Another exemplary embodiment of the present invention provides a rechargeable battery including: a plurality of electrode assemblies including a positive electrode and a negative electrode, a case that houses the electrode assemblies, a terminal that is protruded to the outside of the case, and a current collecting member that electrically connects the electrode assembly and the terminal, wherein the current collecting member includes a side plate that is disposed in a stacking direction of the electrode assembly and a support plate that is bent in the side plate to be disposed parallel to the side plate.

According to an example of the present invention, output power per volume can be increased by minimizing the space that uncoated regions and current collecting members occupy.

According to another possible embodiment, the battery may further comprise a second electrode assembly with a first and a second electrode, wherein at least one of the electrodes of the second electrode assembly has an uncoated region for connecting the one electrode to the terminal via the current collecting member, the uncoated region comprising a first extension, the current collecting member being attached to the first extension of the second electrode assembly. By connecting two electrodes to the terminal via one current collecting member instead of connecting each of the electrodes to the terminal by a separate current collecting member the size is reduced.

According to a further possible embodiment, the uncoated region may comprise a second extension, the first extension extending in a first direction and the second extension extending in a second direction different from the first direction. With first and second extensions directed in different directions, the form of the uncoated region may be adapted to the current collecting member in order to ensure a better mechanical and electrical connection by increasing contact areas between the uncoated region and the current collecting member.

According to a further possible embodiment, the second extension may protrude from the electrode and the first extension may be based on an end portion of the second extension. The second extension protruding from the electrode creates space for the current collecting member and arranging the first extension such that it is based on an end portion of the second extension prevents that the first extension blocks the space for the current collecting member.

According a further possible embodiment, the current collecting member may be enclosed between the first and the second extension. Enclosing the current collecting member between and the second extension provides an even further increased contact surface between the current collecting member and the uncoated region.

According to a further possible embodiment, the first extension of at least one of the electrode assemblies may extend towards the second extension of the respective other electrode assembly. The first extension extending towards the second extension of the respective other electrode assembly may border a channel or duct-shaped volume for receiving the current collecting member, thereby preventing movements of the current collecting member at least towards the first extension and further increasing the contact surface between the current collecting member and the uncoated region.

According to a further possible embodiment, end portions of the first extensions may abut against each other. By abutting against each other, the first extensions enhance the stability of the channel or duct-shaped section of the uncoated region, thereby further affixing the current collecting member and increasing the contact surface between the current collecting member and the uncoated region. Furthermore, the end portions of the first extensions may be attached to each other, e.g. by welding, thereby further stabilizing the channel or duct-shaped section of the uncoated region.

According to a further possible embodiment, the first extensions may overlap each other parallel to the one electrode. Overlapping each other parallel to the electrode results in an arrangement of the first extensions, in which the first extensions are arranged one after the other when viewed from the one electrode. In an overlapping arrangement, forces acting on one of the first extensions are also exerted onto the other of the first extension. Hence, forces acting on one of the extensions are absorbed by both of the extensions, further enhancing stability of the uncoated region.

According to a further possible embodiment, the current collecting member may comprise a side plate and a support plate, the support plate extending from the side plate and being attached to the first extension. A current collecting member with a support plate in addition to a side plate provides for a larger surface for connecting the uncoated region compared to a current collecting member with a side plate only.

According to a further possible embodiment, the support plate may overlap the side plate at least sectionwise. A current collecting member folded in such a way still provides for a large surface for connecting the uncoated region, thereby reducing size necessary for the current collecting member.

According to a further possible embodiment, the side plate and the support plate may form legs of a J-shaped cross-section of the current collecting member. The support plate may form the short leg and the side plate may form the long leg of the J-shaped cross-section. Such a design reduces space needed for the current collecting member, thereby providing for a large surface for connecting the uncoated region.

In a further possible embodiment, the current collecting member may be formed with two support plates that overlap the side plate, the support plates extending towards each other. A current collecting member according to this possible embodiment may have a C-shaped cross-section, which further increases the surface for connecting the uncoated region without requiring a large size in the battery.

In a further possible embodiment, free ends of the support plates may abut against each other and may be affixed to each other, e.g. by welding, thereby enhancing mechanical stability of the current collecting member.

According to a further possible embodiment, the two support plates may overlap each other in order to divide mechanical stress acting on one of the two support plates to both of the two support plates.

According to a further possible embodiment, the first extension may be arranged between the two support plates. The two support plates may each contact the first extension on different sides of the first extension. Sandwiching the first extension between the two support plates further increases the contact surface between the current collecting member and the uncoated region.

According to a further possible embodiment, the current collecting member may be formed with at least one connection plate that interconnects the side plate and the at least one support plate, the side plate and the support plate being arranged at a distance from each other. By arranging the side plate and the support plate at a distance from each other while interconnecting these plates by the connection plate further increases the connection surface between the current collecting member and the uncoated region, in particular, if also the connection plate is in electrical contact with the uncoated region and for instance with the second extension.

According to a further possible embodiment, the current collecting member may be formed with two connection plates that each interconnect the side plate and one of the support plates. Such a current collecting member is formed in a pipe shape and may have an essentially square cross-section.

According to a further possible embodiment, the current collecting member may be formed with at least two side plates that extend at a distance to each other in the same direction. Each of the at least two side plates may be connected to uncoated regions of at least one electrode. A current collecting member with at least two or more side plates may be used for connecting more than one or two electrodes to the terminal. In particular, the current collecting member may connect an amount of electrodes to the terminal. Each of the side plates may be equipped with at least one support plate and at least one connection plate, the amount of electrodes corresponding to twice of the amount of side plates.

According to a further possible embodiment, the electrodes may have a length direction, in which they extend. The electrodes may be spiral-wound about a winding axis, the winding axis extending parallel to the length direction and to the electrodes. Alternatively, the electrodes may be stacked and may be arranged parallel to each other and to the length direction.

### BRIEF DESCRIPTION OF THE DRAWINGS

FIG. 1 is a perspective view illustrating a rechargeable battery according to a first exemplary embodiment of the present invention.
FIG. 2 is a cross-sectional view of a rechargeable battery taken along line II-II of FIG. 1.
FIG. 3 is a perspective view illustrating a coupling state of a positive electrode current collecting member and an electrode assembly according to a first exemplary embodiment of the present invention.
FIG. 4 is a transverse cross-sectional view illustrating a portion of a rechargeable battery according to a first exemplary embodiment of the present invention.
FIG. 5 is a perspective view illustrating a negative electrode current collecting member according to a first exemplary embodiment of the present invention.
FIG. 6A is a cross-sectional view illustrating a state in which a current collecting member is coupled to an uncoated region, and FIG. 6B is a cross-sectional view illustrating a state in which a current collecting member is bent.
FIG. 7 is a transverse cross-sectional view illustrating a rechargeable battery according to a second exemplary embodiment of the present invention.
FIG. 8 is a perspective view illustrating a current collecting member according to a second exemplary embodiment of the present invention.
FIG. 9 is a transverse cross-sectional view of a rechargeable battery according to a third exemplary embodiment of the present invention.
FIG. 10 is a perspective view illustrating a current collecting member according to a third exemplary embodiment of the present invention.
FIG. 11A is a cross-sectional view illustrating a state in which a current collecting member is coupled to an uncoated region, and FIG. 11B is a cross-sectional view illustrating a state in which a current collecting member is bent.
FIG. 12 is a transverse cross-sectional view of a rechargeable battery according to a fourth exemplary embodiment of the present invention.
FIG. 13 is a perspective view illustrating a current collecting member according to a fourth exemplary embodiment of the present invention.
FIG. 14A is a cross-sectional view illustrating a state in which a current collecting member is coupled to an uncoated region, FIG. 14B is a cross-sectional view illustrating a state in which a first support plate is bent, and FIG. 14C is a cross-sectional view illustrating a state in which a second support plate is bent.

### DETAILED DESCRIPTION OF THE EMBODIMENTS

The present invention will be described more fully hereinafter with reference to the accompanying drawings, in which exemplary embodiments of the invention are shown. Like reference numerals designate like elements throughout the specification and the drawings.

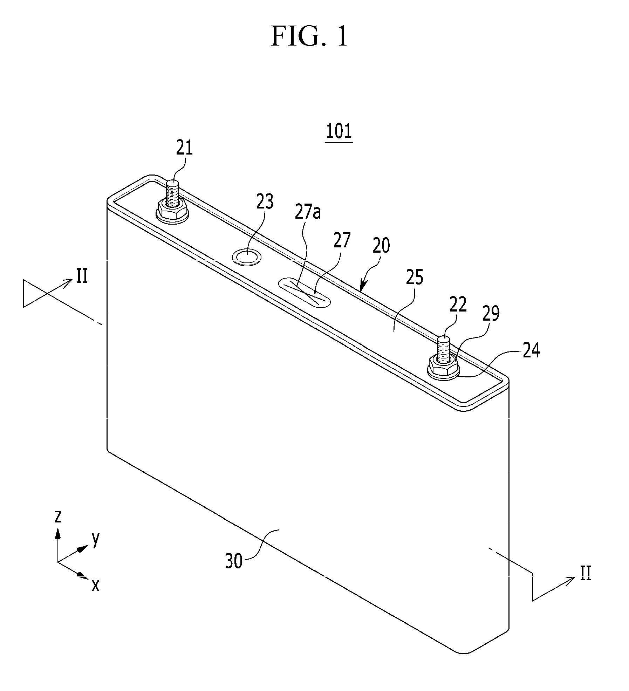

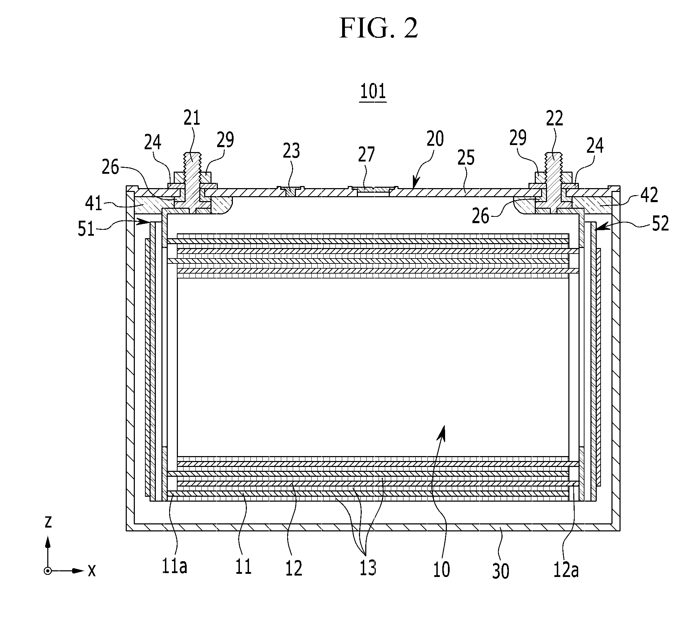

FIG. 1 is a perspective view illustrating a rechargeable battery according to a first exemplary embodiment of the present invention, and FIG. 2 is a cross-sectional view of a rechargeable battery taken along line II-II of FIG. 1.

Referring to FIGS. 1 and 2, a rechargeable battery 101 according to the first exemplary embodiment includes an electrode assembly 10 that is formed by spiral-winding a positive electrode 11 and a negative electrode 12 with interposed a separator 13 therebetween, a case 30 that houses the electrode assembly 10, and a cap assembly 20 that is coupled to an opening of the case 30.

The rechargeable battery 101 according to the first exemplary embodiment illustrates a square-shaped lithium ion rechargeable battery. However, the present invention is not limited thereto, and the present invention can be applied to a battery of various forms such as a lithium polymer battery or a cylindrical battery.

The positive electrode 11 and the negative electrode 12 include a coating region, which is an area in which an active material is applied to a current collector that is formed with thin plate metal foil and uncoated regions 11a and 12a, which are an area in which an active material is not applied.

The positive uncoated region 11a is formed in one side end of the positive electrode 11 in a length direction X of the positive electrode 11, and the negative uncoated region 12a is formed in the other side end of the negative electrode 12 in a length direction X of the negative electrode 12. The positive electrode 11 and the negative electrode 12 are spiral-wound about a winding axis L1 with the separator 13, which is an insulator interposed therebetween. The electrode assembly 10 is spiral-wound and is flatly pressed to have a wide front surface. The front surface is disposed parallel to the winding axis L1.

However, the present invention is not limited thereto, and the electrode assembly 10 may be formed in a structure in which a positive electrode and a negative electrode that are formed with a plurality of sheets are stacked with a separator disposed therebetween.

The case 30 is formed in an approximately cuboid and has an opened opening at one surface thereof. A plurality of electrode assemblies 10 are inserted into the case 30.

The cap assembly 20 includes a cap plate 25 that covers an opening of the case 30, a positive terminal 21 that is protruded to the outside of the cap plate 25 and that is electrically connected to the positive electrode 11, a negative terminal 22 that is protruded to the outside of the cap plate 25 and that is electrically connected to the negative electrode 12, and a vent member 27 that has a notch 27a to be torn according to a predetermined internal pressure.

The cap plate 25 is formed in a thin metal plate, has an electrolyte injection opening for injecting an electrolyte solution at one side thereof, and a seal stopper 23 for sealing the electrolyte injection opening is fixed to the cap plate 25.

The positive terminal 21 is installed to penetrate the cap plate 31, and a first gasket 24 that is positioned at an upper part between the cap plate 25 and the positive terminal 21 and a se cond gasket 26 that is positioned at a lower part between the cap plate 25 and the positive terminal 21 insulate the cap plate 25 and the positive terminal 21.

The positive terminal 21 is formed in a circular cylindrical shape, a nut 29 that supports the positive terminal 21 in an upper part is installed in the positive terminal 21, and a screw thread for fastening the nut 29 is formed in an external circumference of the positive terminal 21.

The positive terminal 21 is electrically connected to the positive uncoated region 11 a using a positive current collecting member 51 as an intermediary, and a terminal flange that supports the positive terminal 21 and the positive current collecting member 51 is formed at a lower end of the positive terminal 21.

The negative terminal 22 is installed to penetrate the cap plate 25, and the first gasket 24 that is positioned at an upper part between the cap plate 25 and the negative terminal 22 and the second gasket 26 that is positioned at a lower part between the cap plate 25 and the negative terminal 22 insulate the cap plate 25 and the negative terminal 22.

The negative terminal 22 is formed in a circular cylindrical shape, the nut 29 that supports the negative terminal 22 in an upper part is installed in the negative terminal 22, and a screw thread for fastening the nut 29 is formed at an external circumference of the negative terminal 22.

The negative terminal 22 is electrically connected to the negative uncoated region 12a using a negative current collecting member 52 as an intermediary, and a terminal flange that supports the negative terminal 22 and the negative current collecting member 52 is formed at a lower end of the negative terminal 22.

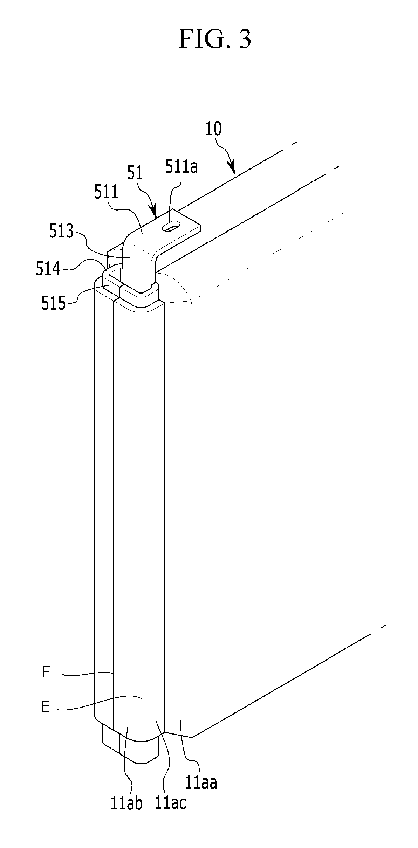

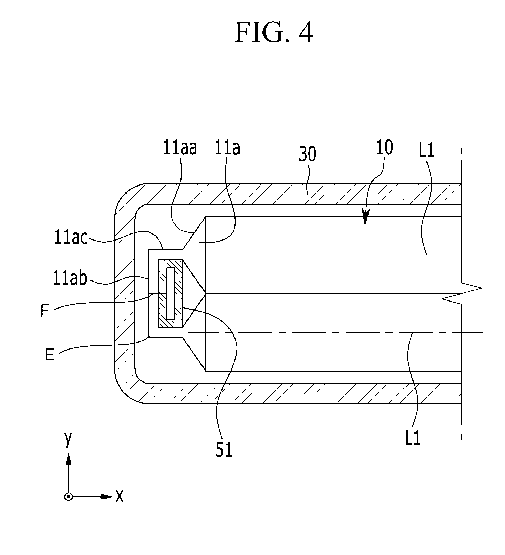

FIG. 3 is a perspective view illustrating a coupling state of a positive electrode current collecting member and an electrode assembly according to a first exemplary embodiment of the present invention, and FIG. 4 is a transverse cross-sectional view illustrating a portion of a rechargeable battery according to a first exemplary embodiment of the present invention.

Referring to FIGS. 3 and 4, the positive electrode current collecting member 51 includes a terminal connection portion 511 that is fixed to the positive terminal 21, a side plate 513 that is bent in the terminal connection portion 511, a connection plate 514 that is bent at the side plate 513, and a support plate 515 that is bent in the connection plate 514.

The terminal connection portion 511 is formed in a quadrangular plate shape, and a hole 511 a that inserts a protrusion that is formed in a lower portion of the positive terminal 21 is formed in the center thereof. Further, the terminal connection portion 511 is bonded by welding to a lower portion of the positive terminal 21.

The side plate 513 is bent orthogonally toward the bottom of the case 30 in an end portion of a length direction of the terminal connection portion 511. The side plate 513 is connected in a height direction Z of the case 30 and is disposed parallel to a side surface of the case 30. A hole that is connected in a height direction is formed in the side plate 513.

Further, the side plate 513 is disposed between the electrode assemblies 10 and is disposed vertically to the winding axis L1, which is a winding axis of the electrode assembly 10 to be disposed parallel to a stacking direction (y-axis direction of FIG. 4) of the electrode assembly 10. However, the present invention is not limited thereto, and the side plate 513 may be disposed to intersect the winding axis L1.

The connection plate 514 is connected to both side ends of the side plate 513 and is bent vertically toward a side surface of the case 30 in the side plate 513. Accordingly, the connection plate 514 is disposed parallel to the winding axis L1. The support plate 515 is bent in the connection plate 514 to be disposed to intersect a wide front surface of the electrode assembly 10, and end portions of the support plate 515 that is bent in the connection plate 514 of both sides come in contact and are supported by each other. Accordingly, the support plate 515 is disposed to intersect the winding axis L1.

In the present exemplary embodiment, the support plate 515 is bent in the side plate 513 using the connection plate 514 as an intermediary, but the present invention is not limited thereto, and the support plate 515 is directly connected to the side plate 513 and is bent. Further, the support plate 515 is bent vertically to the connection plate 514 to be disposed parallel to the side plate 513, but the present invention is not limited thereto.

The positive uncoated region 11 a is fixed by welding to the connection plate 514 and the support plate 515. The positive uncoated region 11a includes an inclined surface 11aa that is formed obliquely toward the center of a width direction Y of the electrode assembly 10, a first extension 11ab that is bent to the inclined surface 11aa to be disposed to intersect the winding axis L1 and that is attached to the support plate 515, and a second extension 11ac that is protruded parallel to the winding axis L1 in the inclined surface 11aa and that connects the inclined surface 11aa and the first extension 11ab and that is attached to the connection plate 514. The first extension 11ab is bent vertically to the winding axis L1, is disposed to intersect a wide front surface of the electrode assembly, and is parallel to a side surface of the case 30.

The first extension 11ab is based on an end portion E of the second extension 11ac, the end portion E pointing away from the electrode 11.

Further, the first extension 11ab of the adjacently disposed electrode assembly 10 is bent toward the positive uncoated region 11a of the neighboring electrode assembly 10, and end portions F of the first extensions 11ab are connected.

As described above, according to the present exemplary embodiment, a portion that is connected to the positive uncoated region 11a in the positive electrode current collecting member 51 is formed in a pipe shape having a square section by the side plate 513, the connection plate 514, and the support plate 515. Further, the positive uncoated region 11a is installed to enclose the connection plate 514 and the support plate 515.

In the present exemplary embodiment, when the bent support plate 515 is provided, a contact area of the positive electrode current collecting member 51 and the positive uncoated region 11a is enlarged, thereby stably fixing the electrode assembly 10. Further, by reducing occupying space of the positive electrode current collecting member 51, an output per unit volume can be improved. A conventional uncoated region is protruded in a direction of a winding axis, and a current collecting member is disposed to parallel to the uncoated region, and according to such a structure, space is necessary by a protruded length of the uncoated region and thus there was a problem that a volume increases. However, according to the present exemplary embodiment, by reducing occupying space of the positive uncoated region 11a and the positive electrode current collecting member 51, an output per unit volume is remarkably improved.

Further, as shown in FIG. 4, the positive uncoated region 11a has a first extension 11ab that is bent to the inclined surface 11aa and a second extension 11ac that connects the inclined surface 11aa and the first extension 11ab and that is protruded in a direction of the winding axis L1, and because the first extension 11ab and the second extension 11ac are fixed to the positive electrode current collecting member 51, the positive uncoated region 11a is supported by the positive electrode current collecting member 51 in two directions to prevent a contact of the positive uncoated region 11a and the positive electrode current collecting member 51 from being bad due to a vibration or an impact.

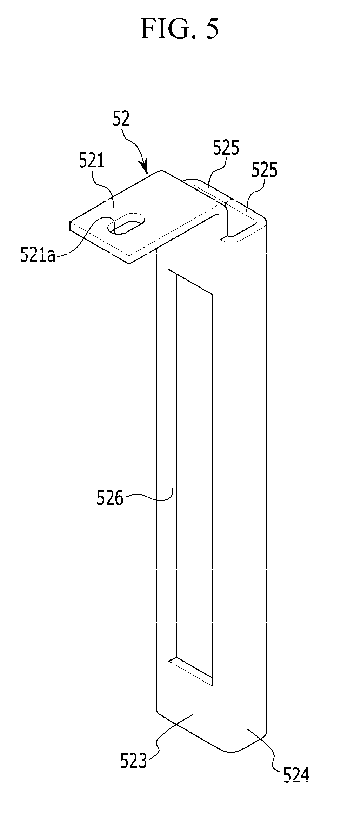

FIG. 5 is a perspective view illustrating a negative electrode current collecting member according to a first exemplary embodiment of the present invention.

Referring to FIG. 5, the negative electrode current collecting member 52 includes a terminal connection portion 521 that is fixed to the negative terminal 22, a side plate 523 that is bent in the terminal connection portion 521, a connection plate 524 that is bent in the side plate 523, and a support plate 525 that is bent in the connection plate 524.

The terminal connection portion 521 is formed in a quadrangular plate shape, and a hole 512a that inserts a protrusion that is formed in a lower portion of the positive terminal 21 is formed at the center thereof. Further, the terminal connection portion 521 is bonded by welding to a lower portion of the positive terminal 21. The side plate 523 is formed in a height direction Z of the case 30, and a hole 526 that is formed in a height direction is formed in the side plate 523.

The negative electrode current collecting member 52 according to the present exemplary embodiment is formed in the same structure as that of the positive electrode current collecting member 51 and thus a detailed description of the same structure as that of the positive electrode current collecting member 52 will be omitted.

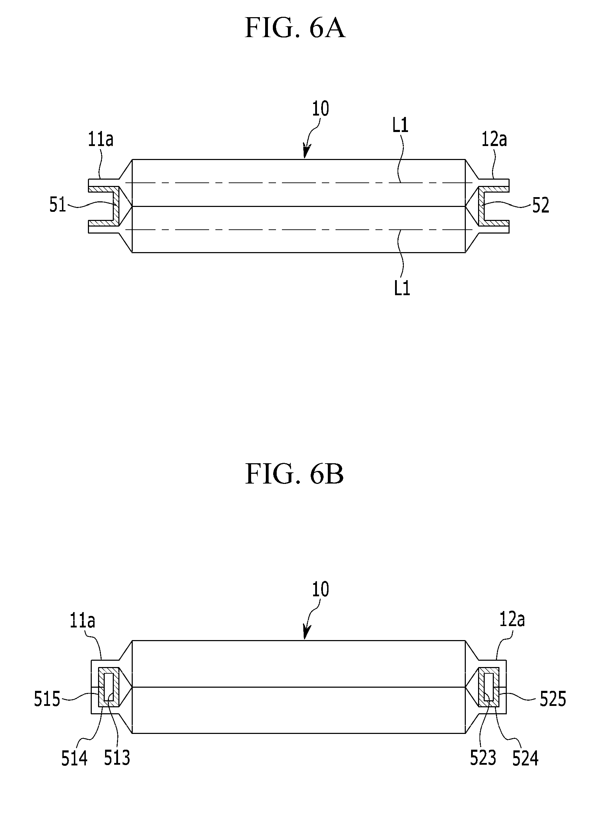

FIG. 6A is a cross-sectional view illustrating a state in which a current collecting member is coupled to an uncoated region, and FIG. 6B is a cross-sectional view illustrating a state in which a current collecting member is bent.

A method of installing a current collecting member according to the present exemplary embodiment will be described with reference to FIGS. 6A and 6B. The method of installing current collecting members 51 and 52 according to the present exemplary embodiment includes step of inserting the current collecting members 51 and 52 between the uncoated regions 11a and 12a of the neighboring electrode assembly 10, step of bonding the uncoated regions 11a and 12a to a protrusion that is bent at both side ends of the side plates 513 and 523, and step of adjusting a protruding angle of an opposite protrusion.

At step of inserting, the side plates 513 and 523 are inserted between the uncoated regions 11a and 12a, and a protrusion that is protruded at both side ends of the side plates 513 and 523 closely contacts with the uncoated regions 11a and 12a. In this case, the protrusion is disposed parallel to the uncoated regions 11a and 12a and the winding axis L1.

At step of bonding, the uncoated regions 11a and 12a and the protrusion are bonded with a method of ultrasonic welding and resistance welding. Next, at step of adjusting a protruding angle, by bending an opposite disposed protrusion toward a neighboring protrusion, the connection plates 514 and 524 and the support plates 515 and 525 are formed.

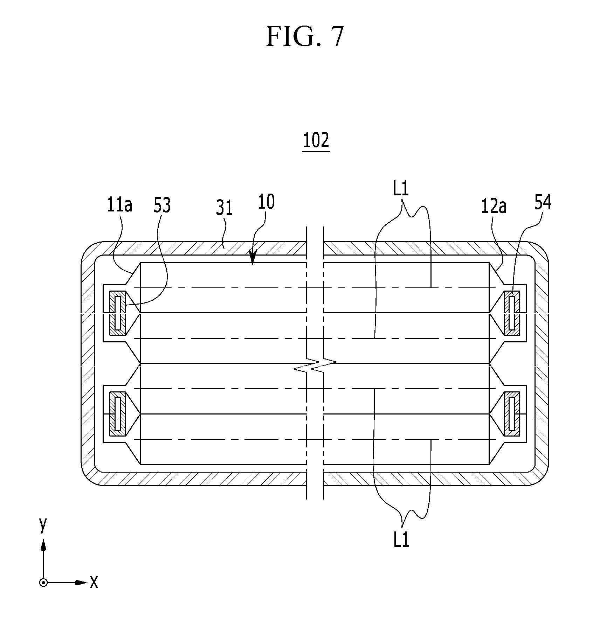

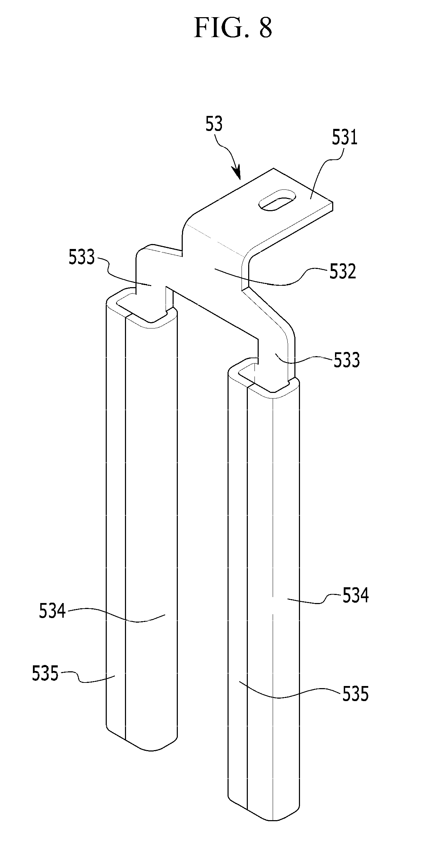

FIG. 7 is a transverse cross-sectional view illustrating a rechargeable battery according to a second exemplary embodiment of the present invention, and FIG. 8 is a perspective view illustrating a current collecting member according to a second exemplary embodiment of the present invention.

Referring to FIGS. 7 and 8, a rechargeable battery 102 according to the present exemplary embodiment includes a case 31, a plurality of electrode assemblies 10 that are installed within the case 31, and current collecting members 53 and 54 that connect the electrode assembly 10 and a terminal.

The rechargeable battery 102 according to the present exemplary embodiment is formed identically to or similarly to the rechargeable battery according to the first exemplary embodiment, except for the number of the electrode assemblies 10 and a structure of the current collecting members 53 and 54. Accordingly, a description of a structure identical to or similar to those of the first exemplary embodiment will be omitted.

Four electrode assemblies 10 are installed within the case 31, a positive electrode current collecting member 53 is connected to a positive uncoated region 11a, and a negative electrode current collecting member 54 is connected to a negative uncoated region 12a.

The positive electrode current collecting member 53 includes a terminal connection portion 531 that is fixed to a positive terminal 21, an upper side plate 532 that is bent in the terminal connection portion 531, two lower side plates 533 that are connected at a lower portion of the upper side plate 532 and that are separated from each other to be connected to a lower part, a connection plate 534 that is bent in the lower side plate 533, and a support plate 535 that is bent in the connection plate 534.

The negative electrode current collecting member 54 is formed in the same structure as that of the positive electrode current collecting member 53 and thus a description of the positive electrode current collecting member 53 replaces a description of the negative electrode current collecting member 54.

The terminal connection portion 531 is formed in a quadrangular plate shape, and a hole that inserts the positive terminal 21 is formed in the center thereof. Further, the terminal connection portion 531 is bonded by welding to a lower portion of the positive terminal 21.

The upper side plate 532 is bent orthogonally toward the bottom of the case 30 in an end portion of a length direction of the terminal connection portion 531. The upper side plate 532 is formed in a height direction Z of the case 30, and lower side plates 533 that are connected to the upper side plate 532 are formed at a lower end of the upper side plate 532. Two lower side plates 533 are formed downward from both side ends of the upper side plate 532. The connection plate 534 is connected to both side ends of the lower side plate 533, is bent vertically in the lower side plate 533, and is disposed parallel to the winding axis L1. The support plate 535 that is vertically bent in the connection plate 534 is formed at the side end of the connection plate 534.

The positive uncoated region 11a and the negative uncoated region 12a are fixed by welding to the connection plate 534 and the support plate 535.

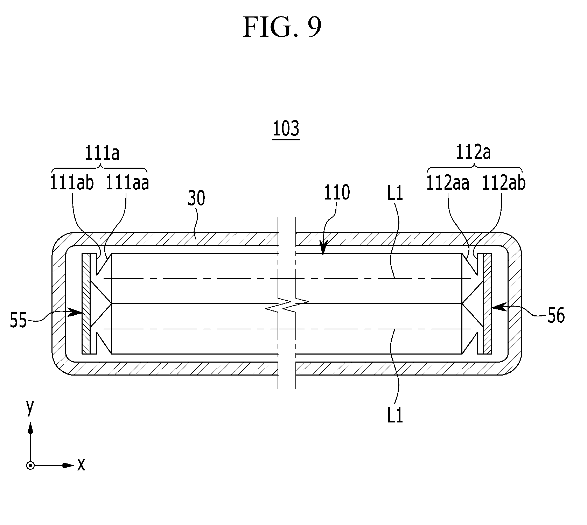

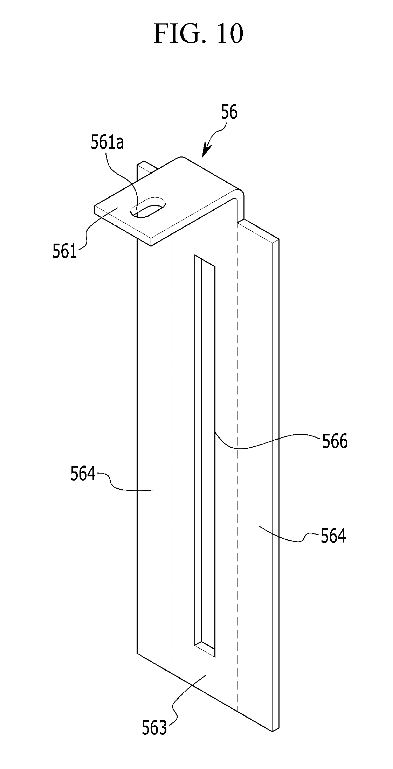

FIG. 9 is a transverse cross-sectional view of a rechargeable battery according to a third exemplary embodiment of the present invention, and FIG. 10 is a perspective view illustrating a current collecting member according to a third exemplary embodiment of the present invention.

Referring to FIGS. 9 and 10, a rechargeable battery 103 according to the present exemplary embodiment includes a case 30, a plurality of electrode assemblies 110 that are installed within the case 30, and current collecting members 55 and 56 that connect the electrode assembly 110 and a terminal.

The rechargeable battery 103 according to the present exemplary embodiment is formed identically to or similarly to the rechargeable battery according to the first exemplary embodiment, except for a structure of the electrode assembly 110 and the current collecting members 55 and 56. Accordingly, a detailed description of a structure identical to or similar to that of the first exemplary embodiment will be omitted.

The rechargeable battery 103 according to the present exemplary embodiment includes a case 30, a plurality of electrode assemblies 110 that are installed within the case 30, and current collecting members 55 and 56 that connect the electrode assembly 110 and a terminal.

Two electrode assemblies 110 are installed within the case 30, the positive electrode current collecting member 55 is connected to the positive uncoated region 111 a, and the negative electrode current collecting member 56 is connected to the negative uncoated region 112a.

The negative electrode current collecting member 56 includes a terminal connection portion 561 that is fixed to a negative terminal, a side plate 563 that is bent in the terminal connection portion 561 to be connected to a lower part, and a support plate 564 that is disposed parallel to the side plate 563.

The terminal connection portion 561 is formed in a quadrangular plate shape, and a hole 561 a that inserts a protrusion that is formed in a lower end of the negative terminal is formed at the center thereof. Further, the terminal connection portion 561 is bonded by welding to a lower part of the negative terminal.

The side plate 563 is bent orthogonally toward the bottom of the case 30 in an end portion of a length direction of the terminal connection portion 561. The side plate 563 is formed in a height direction Z of the case 30, and a hole 566 is formed in the side plate 563. The side plate 563 is disposed parallel to a stacking direction of the electrode assembly 110 and is vertical to the winding axis L1.

The support plate 564 is connected to both side ends of the side plate 563 and is protruded parallel to the side plate 563 at the side end of the side plate 563. Accordingly, the side plate 563 and the support plate 564 are positioned on the same plane.

The positive electrode current collecting member 55 is formed in the same structure as that of the negative electrode current collecting member 56 and thus a detailed description of the same structure as that of the negative electrode current collecting member 56 will be omitted.

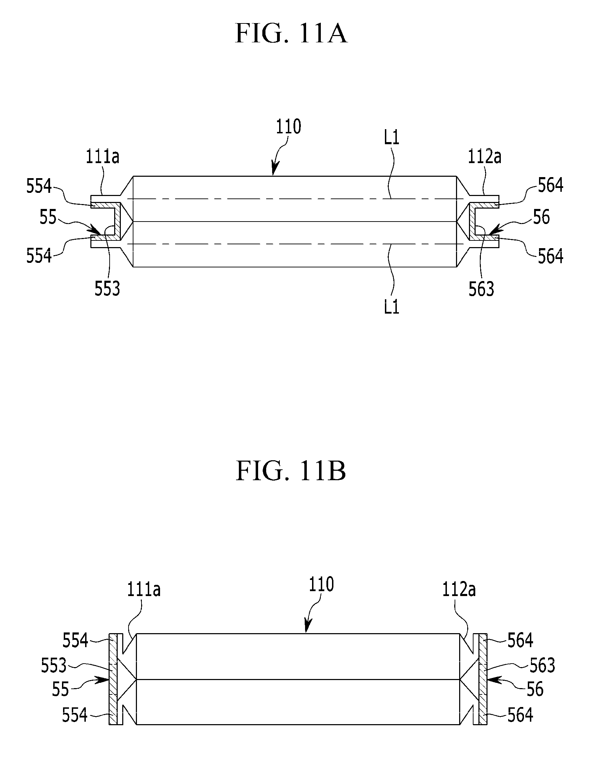

As shown in FIGS. 9 and 11A, the positive uncoated region 111a is fixed by welding to the support plate 554. The positive uncoated region 111a includes an inclined surface 111aa that is formed obliquely toward the center of a width direction Y of the electrode assembly 10 and a first extension 111ab that is bent to the inclined surface 111aa to be disposed to intersect the winding axis L1 and that is attached to the support plate 564. The first extension 111ab is bent vertically to the winding axis L1 and is disposed parallel to a side surface of the case 30. The first extensions 111ab of the adjacently disposed electrode assembly 10 are bent toward the outside of the case 30.

The negative uncoated region 112a is fixed by welding to the support plate 564. The negative uncoated region 112a includes an inclined surface 112aa that is formed obliquely toward the center of a width direction Y of the electrode assembly 10 and a first extension 112ab that is bent to the inclined surface 112aa to be disposed to intersect the winding axis L1 and that is attached to the support plate 564. The first extension 112ab is bent vertically to the winding axis L1 and is disposed parallel to a side surface of the case 30. The first extensions 112ab of the adjacently disposed electrode assembly 10 are bent toward the outside of the case 30.

In the present exemplary embodiment, in the uncoated regions 111 a and 112a, when the first extension 111ab that is bent to the inclined surface 111aa is formed, and when the support plates 554 and 564 are connected to the side end of the side plates 553 and 563 are formed, occupying space of the uncoated regions 111 a and 112a and the current collecting members 55 and 56 is minimized and thus an output per unit volume can be remarkably improved.

FIG. 11A is a cross-sectional view illustrating a state in which a current collecting member is coupled to an uncoated region, and FIG. 11B is a cross-sectional view illustrating a state in which a current collecting member is bent.

A method of installing a current collecting member according to the present exemplary embodiment will be described with reference to FIGS. 11A and 11B. The method of installing the current collecting members 55 and 56 according to the present exemplary embodiment includes step of inserting the current collecting members 55 and 56 between the uncoated regions 111 a and 112a of the neighboring electrode assembly 110, step of bonding the uncoated regions 111 a and 112a to a bent protrusion at both side ends of the side plates 553 and 563, and step of adjusting a protruding angle of an opposite protrusion.

At step of inserting, the side plates 553 and 563 are inserted between the uncoated regions 111 a and 112a, and a protrusion that is protruded at both side ends of the side plates 553 and 563 close contacts with the uncoated regions 111 a and 112a. In this case, the protrusion is disposed parallel to the uncoated regions 111 a and 112a and the winding axis L1.

At step of bonding, the uncoated regions 111a and 112a and the protrusion are bonded by a method such as ultrasonic welding and resistance welding. Next, at step of adjusting a protruding angle, by spreading a protrusion that is disposed opposite to be parallel to the support plates 554 and 564, the side plates 553 and 563 are formed.

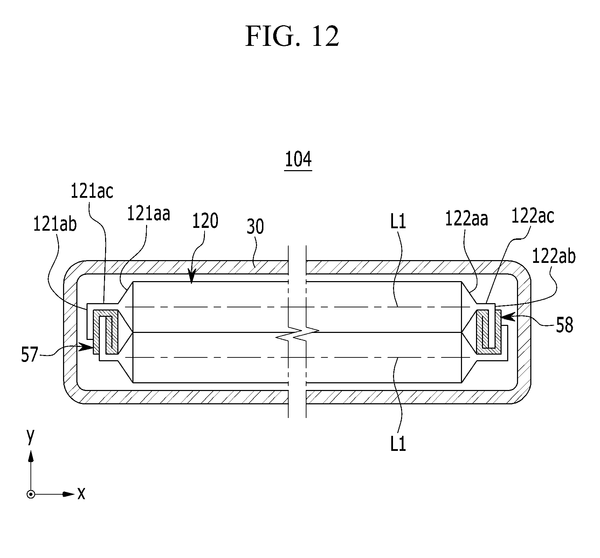

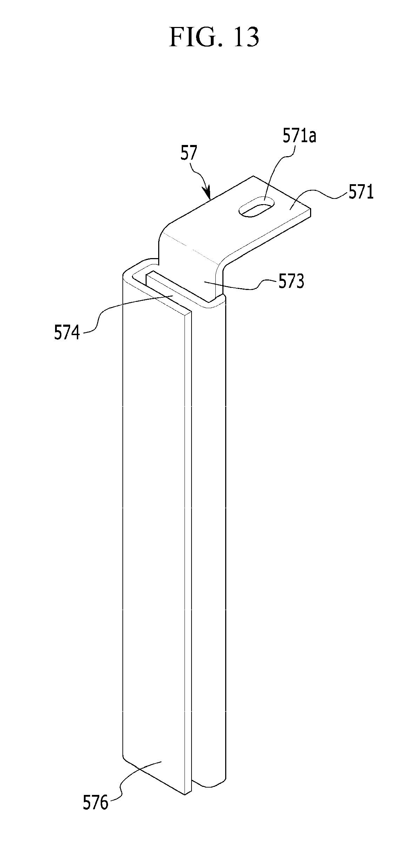

FIG. 12 is a transverse cross-sectional view of a rechargeable battery according to a fourth exemplary embodiment of the present invention, and FIG. 13 is a perspective view illustrating a current collecting member according to a fourth exemplary embodiment of the present invention.

Referring to FIGS. 12 and 13, a rechargeable battery 104 according to the present exemplary embodiment includes a case 30, a plurality of electrode assemblies 120 that are installed within the case 30, and current collecting members 57 and 58 that connect the electrode assembly 120 and a terminal.

The rechargeable battery 104 according to the present exemplary embodiment is formed identically to or similarly to the rechargeable battery according to the first exemplary embodiment, except for a structure of the electrode assembly 120 and the current collecting members 57 and 58. Accordingly, a description of a structure identical to or similar to that of the first exemplary embodiment will be omitted.

The rechargeable battery 104 according to the present exemplary embodiment includes a case 30, a plurality of electrode assemblies 120 that are installed within the case 30, and current collecting members 57 and 58 that connect the electrode assembly 120 and a terminal.

Two electrode assemblies 120 are installed within the case 30, the positive electrode current collecting member 57 is connected to a positive uncoated region 121 a, and the negative electrode current collecting member 58 is connected to a negative uncoated region 122a.

The positive electrode current collecting member 57 includes a terminal connection portion 571 that is fixed to a positive terminal, a side plate 573 that is bent in the terminal connection portion 571 to be connected to a lower part, a first support plate 574 that is bent at one side end of the side plate 573 to be disposed parallel to the side plate 573, and a second support plate 576 that is bent in the other side end of the side plate 573 to be disposed to parallel to the side plate 573.

The terminal connection portion 571 is formed in a quadrangular plate shape, and a hole 571 a that inserts a protrusion that is formed at an lower end of the positive terminal is formed at the center thereof. Further, the terminal connection portion 571 is bonded by welding to a lower part of the positive terminal.

The side plate 573 is bent orthogonally toward the bottom of the case 30 in an end portion of a length direction of the terminal connection portion 571. The side plate 573 is formed in a height direction Z of the case 30, and a hole is formed in the side plate 573.

The first support plate 574 is connected to one side end of the side plate 573, and the second support plate 576 is connected to the other side end of the side plate 573. The second support plate 576 is disposed at the outside of the first support plate 574, and thus the first support plate 574 is inserted between the side plate 573 and the second support plate 576.

The side plate 573, the first support plate 574, and the second support plate 576 are disposed to intersect the winding axis L1, and the side plate 573, the first support plate 574, and the second support plate 576 are disposed perpendicularly to the winding axis L1.

One positive uncoated region 121 a in the neighboring electrode assembly 120 is fixed by welding to the first support plate 574, and the other one positive uncoated region 121 a is fixed by welding to the second support plate 576.

The positive uncoated region 121 a includes an inclined surface 121 aa that is formed obliquely toward the center of a width direction Y of the electrode assembly 10, a first extension 121ab that is bent to the inclined surface 121aa to be disposed to intersect the winding axis L1 and that is attached to the support plate, and a second extension 121ac that connects the first extension 121 ab and the inclined surface 121 aa.

The first extension 121ab is bent orthogonal to the winding axis L1 and is disposed parallel to a side surface of the case 30, and the first extension 121ab of one side of the adjacently disposed electrode assembly 10 is disposed at the outside further than the other first extension 121ab of the neighboring electrode assembly 10. Further, the first extension 121ab of one side electrode assembly is inserted between the support plates 574 and 576.

The negative electrode current collecting member 58 is formed in the same structure as that of the positive electrode current collecting member 57 and thus a detailed description of the same structure as that of the positive electrode current collecting member 57 will be omitted.

The negative uncoated region 122a includes an inclined surface 121aa that is formed obliquely toward the center of a width direction Y of the electrode assembly 10, a first extension 121ab that is bent in the inclined surface 121aa to be disposed to intersect the winding axis L1 and that is attached to the support plate, and a second extension 121ac that connects the first extension 121 ab and the inclined surface 121 aa.

The first extension 121ab is bent vertically to the winding axis L1 to be disposed parallel to a side surface of the case 30, and the first extension 121ab of one side of the adjacently disposed electrode assembly 10 is disposed at the outside further than the other first extension 121 ab of the neighboring electrode assembly 10. Further, the first extension 121 ab of one side electrode assembly is inserted between support plates.

As described above, according to the present exemplary embodiment, in a state in which an uncoated region is fixed to the support plate, because the support plates are bent and stacked, the uncoated region is inserted between the support plates to be stably fixed, and by reducing a volume of the uncoated region and the current collecting member, an output per unit volume can be improved.

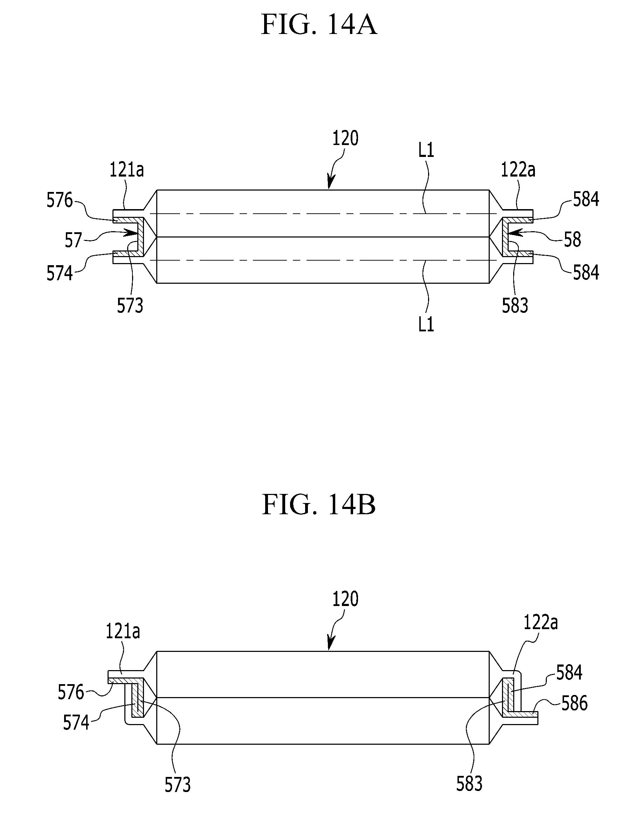

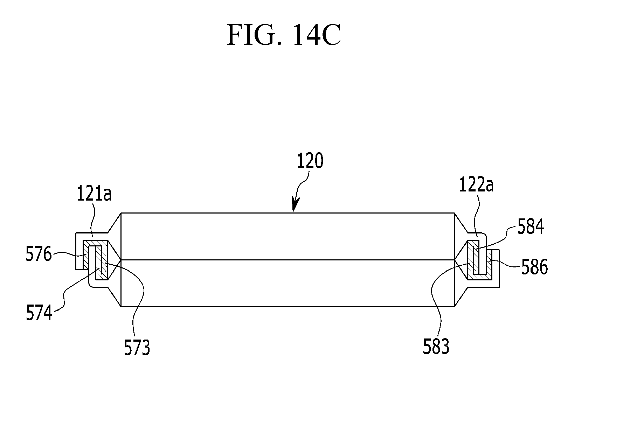

FIG. 14A is a cross-sectional view illustrating a state in which a current collecting member is coupled to an uncoated region, FIG. 14B is a cross-sectional view illustrating a state in which a first support plate is bent, and FIG. 14C is a cross-sectional view illustrating a state in which a second support plate is bent.

A method of installing a current collecting member according to the present exemplary embodiment will be described with reference to FIGS. 14A and 14C. The method of installing current collecting members 57 and 58 according to the present exemplary embodiment includes step of inserting the current collecting members 57 and 58 between the uncoated regions 121a and 122a of the neighboring electrode assembly 120, step of bonding the uncoated regions 121a and 122a to the bent protrusion at both side ends of the side plates 573 and 583, and step of adjusting a protruding angle of opposite protrusions.

At step of inserting, the side plates 573 and 583 are inserted between the uncoated regions 121 a and 122a, and a protrusion that is protruded at both side ends of the side plates 573 and 583 close contacts with the uncoated regions 121a and 122a. In this case, the protrusion is disposed parallel to the uncoated regions 121 a and 122a and the winding axis L1.

At step of bonding, the uncoated regions 121 a and 122a and the protrusion are bonded by a method of ultrasonic welding and resistance welding. Next, step of adjusting a protruding angle of a protrusion includes step of bending the first support plates 574 and 584 to stack to a side plate at the opposite disposed protrusion and step of bending the second support plates 576 and 586 to stack to the first support plates 574 and 584.

The first support plates 574 and 584 are bent toward the neighboring second support plates 576 and 586, and the second support plates 576 and 586 are bent to stack to the first support plates 574 and 584. Accordingly, the side plates 573 and 583, the first support plates 574 and 584, and the second support plates 576 and 586 are disposed to stack.

## Claims

1. A rechargeable battery (101) comprising
at least one terminal (21, 22),
a first electrode assembly (10) with a first and a second electrode (11, 12), wherein at least one of the electrodes (11, 12) has an uncoated region (11a, 12a), and
at least one current collecting member (51, 52) that electrically connects the one electrode (11, 12) and the terminal (21, 22), wherein
the uncoated region (11a, 12a) comprises a first extension (11ab), wherein the first extension (11ab) essentially extends perpendicularly to one of the electrodes (11, 12) and wherein
the current collecting member (51, 52) is attached to the first extension (11ab), and wherein
the battery (101) further comprises a second electrode assembly (10) neighboring the first electrode assembly (10) and having a first and a second electrode (11, 12), wherein at least one of the electrodes (11, 12) of the second electrode assembly (10) has an uncoated region (11a, 12a) for connecting the one electrode (11, 12) to the terminal (21, 22) via the current collecting member (51, 52),
the uncoated region (11a, 12a) comprising a first extension (11ab), the current collecting member (51, 52) being attached to the first extension (11ab) of second electrode assembly (10), **characterized in that** the first extensions (11ab) of the first and the second electrode assemblies (10), that are attached to the current collecting member (51, 52) extend in opposite directions.

2. The battery (101) of claim 1, wherein the uncoated region (11a) comprises a second extension (11ac), the first extension (11ab) extending in a first direction and the second extension (11ac) extending in a second direction different from the first direction.

3. The battery (101) of claim 2, wherein the second extension (11ac) protrudes from the electrode (11, 12) and the first extension (11ab) is based on an end portion (E) of the second extension (11ac).

4. The battery (101) according to claims 2 or 3, wherein the current collecting member (51, 52) is enclosed between the first and the second extension (11ab, 11ac).

5. The battery (101) according to any of claims 2 to 4, wherein the first extension (11ab) of at least one of the electrode assemblies (10) extends towards the second extension (11ac) of the respective other electrode assembly (10).

6. The battery (101) according to any of claims 1 to 5, wherein the first extensions (121 ab) overlap each other such that they are arranged after each other when viewed from the one electrode (11, 12).

7. The battery (101) according to any of claims 1 to 6, wherein the current collecting member (55) comprises a side plate (553) and a support plate (554), the support plate (554) extending from the side plate (553) and being attached to the first extension (11ab).

8. The battery (101) according to claim 7, wherein the support plate (515, 525) overlaps the side plate (513, 523) at least sectionwise.

9. The battery (101) according to claim 7 or 8, wherein the current collecting member (51, 52) is formed with at least one connection plate (514, 524) that interconnects the side plate (513, 523) and the support plate (515, 525), the side plate (513, 523) and the support plate (515, 525) being arranged at a distance from each other such that a section of the current collecting member (51, 52) comprises a J-shaped cross-section, wherein the side plate (513, 523) and the support plate (515, 525) form parallel sections of the J-shaped cross-section of the current collecting member (51, 52).

10. The battery (101) according to any of claims 7 to 9, wherein the current collecting member (51, 52) is formed with two support plates (515, 525) that overlap the side plate (513, 523), the support plates (515, 525) extending towards each other.

11. The battery (104) according to claim 10, wherein the two support plates (574, 576) overlap each other.

12. The battery (104) according to claim 10 or 11, wherein the first extension (122ab) is arranged between the two support plates (574, 576).

13. The battery (101) according to any of claims 7 to 12, wherein the current collecting member (53) is formed with at least two side plates (533) that extend at a distance to each other in the same direction.

## Patentansprüche

1. Wiederaufladbare Batterie (101, 102, 104), aufweisend zumindest einen Anschluss (21, 22),
eine erste Elektrodenanordnung (10) mit einer ersten und einer zweiten Elektrode (11, 12), wobei zumindest eine der Elektroden (11, 12) einen unbeschichteten Bereich (11a, 12a) aufweist, und
zumindest ein Stromsammelelement (51, 52, 53, 54, 55), das die eine Elektrode (11, 12) und den Anschluss (21, 22) elektrisch verbindet, wobei der unbeschichtete Bereich (11 a, 12a) eine erste Verlängerung (11ab, 121 ab) aufweist, wobei sich die erste Verlängerung (11ab) im Wesentlichen senkrecht zu einer der Elektroden (11, 12) erstreckt, und wobei
das Stromsammelelement (51, 52, 53, 54, 55) an der ersten Verlängerung (11ab) befestigt ist, und wobei
die Batterie (101) weiterhin eine zweite Elektrodenanordnung (10), die zur ersten Elektrodenanordnung (10) benachbart ist und eine erste und eine zweite Elektrode (11, 12) aufweist, aufweist, wobei zumindest eine der Elektroden (11, 12) der zweiten Elektrodenanordnung (10) einen unbeschichteten Bereich (11a, 12a) zum Verbinden der einen Elektrode (11, 12) mit dem Anschluss (21, 22) mittels des Stromsammelelements (51, 52, 53, 54, 55) aufweist,
wobei der unbeschichtete Bereich (11a, 12a) eine erste Verlängerung (11ab) aufweist, wobei das Stromsammelelement (51, 52) an der ersten Verlängerung (11ab, 121 ab) der zweiten Elektrodenanordnung (10) befestigt ist,
**dadurch gekennzeichnet, dass** sich die ersten Verlängerungen (11ab, 121 ab) der ersten und zweiten Elektrodenanordnung (10), die am Stromsammelelement (51, 52, 53, 54, 55) befestigt sind, in entgegengesetzte Richtungen erstrecken.

2. Batterie (101, 104) nach Anspruch 1, wobei der unbeschichtete Bereich (11a) eine zweite Verlängerung (11ac) aufweist, wobei sich die erste Verlängerung (11ab, 121 ab) in eine erste Richtung erstreckt und sich die zweite Verlängerung (11ac) in eine von der ersten Richtung verschiedene zweite Richtung erstreckt.

3. Batterie (101, 104) nach Anspruch 2, wobei die zweite Verlängerung (11ac) von der Elektrode (11, 12) vorragt und die erste Verlängerung (11ab, 12 1 ab) auf einem Endabschnitt (E) der zweiten Verlängerung (11ac) fußt.

4. Batterie (101, 104) nach Anspruch 2 oder 3, wobei das Stromsammelelement (51, 52, 53, 54, 55) zwischen der ersten (11ab, 121ab) und der zweiten Verlängerung (11ac) eingeschlossen ist.

5. Batterie (101, 102, 104) nach einem der Ansprüche 2 bis 4, wobei sich die erste Verlängerung (11ab) zumindest einer der Elektrodenanordnungen (10) zur zweiten Verlängerung (11ac) der jeweils anderen Elektrodenanordnung (10) erstreckt.

6. Batterie (104) nach einem der Ansprüche 1 bis 5, wobei sich die ersten Verlängerungen (121ab) derart überlappen, dass sie, von der einen Elektrode (11, 12) aus betrachtet, nacheinander angeordnet sind.

7. Batterie (101, 102, 104) nach einem der Ansprüche 1 bis 6, wobei das Stromsammelelement (51, 52, 53, 54, 55) eine Seitenplatte (513, 523, 533, 553) und eine Stützplatte (515, 525, 554, 574, 576) aufweist, wobei sich die Stützplatte (515, 525, 554, 574, 576) von der Seitenplatte (513, 523, 533, 553) erstreckt und an der ersten Verlängerung (11ab, 121ab) befestigt ist.

8. Batterie (101) nach Anspruch 7, wobei die Stützplatte (515, 525) die Seitenplatte (513, 523) zumindest abschnittsweise überlappt.

9. Batterie (101) nach Anspruch 7 oder 8, wobei das Stromsammelelement (51, 52) mit zumindest einer Verbindungsplatte (514, 524), die die Seitenplatte (513, 523) und die Stützplatte (515, 525) miteinander verbindet, ausgebildet ist, wobei die Seitenplatte (513, 523) und die Stützplatte (515, 525) derart in einem Abstand voneinander angeordnet sind, dass ein Abschnitt des Stromsammelelements (51, 52) einen J-förmigen Querschnitt aufweist, wobei die Seitenplatte (513, 523) und die Stützplatte (515, 525) parallele Abschnitte des J-förmigen Querschnitts des Stromsammelelements (51, 52) ausbilden.

10. Batterie (101, 102, 104) nach einem der Ansprüche 7 bis 9, wobei das Stromsammelelement (51, 52, 53, 54, 55) mit zwei Stützplatten (515, 525, 554, 574, 576), die die Seitenplatte (513, 523, 533, 553) überlappen, ausgebildet ist, wobei sich die Stützplatten (515, 525, 554, 574, 576) zueinander erstrecken.

11. Batterie (104) nach Anspruch 10, wobei sich die zwei Stützplatten (574, 576) überlappen.

12. Batterie (104) nach Anspruch 10 oder 11, wobei die erste Verlängerung (121ab) zwischen den zwei Stützplatten (574, 576) angeordnet ist.

13. Batterie (102) nach einem der Ansprüche 7 bis 12, wobei das Stromsammelelement (53) mit zumindest zwei Seitenplatten (533), die sich in einem Abstand voneinander in dieselbe Richtung erstrecken, ausgebildet ist.

## Revendications

1. Batterie rechargeable (101, 102, 104) comprenant
au moins une borne (21, 22),
un premier ensemble d'électrodes (10) avec une première et une deuxième électrodes (11, 12), où au moins l'une des électrodes (11, 12) présente une zone non revêtue (11a, 12a), et
au moins un élément de collecte de courant (51, 52, 53, 54, 55) qui relie électriquement l'électrode (11, 12) et la borne (21, 22), où
la zone non revêtue (11a, 12a) comprend un premier prolongement (11ab, 121ab), où le premier prolongement (11ab) s'étend essentiellement de manière perpendiculaire à l'une des électrodes (11, 12) et où
l'élément de collecte de courant (51, 52, 53, 54, 55) est fixé au premier prolongement (11ab), et où
la batterie (101) comprend en outre un deuxième ensemble d'électrodes (10) adjacent au premier ensemble d'électrodes (10) et ayant des premier et deuxième électrodes (11, 12), où au moins l'une des électrodes (11, 12) du deuxième ensemble d'électrodes (10) présente une zone non revêtue (11a, 12a) pour relier l'électrode (11, 12) à la borne (21, 22) par l'intermédiaire de l'élément de collecte de courant (51, 52, 53, 54, 55),
la zone non revêtue (11a, 12a) comprenant un premier prolongement (11ab), l'élément de collecte de courant (51, 52) étant fixé au premier prolongement (11ab, 121ab) d'un deuxième ensemble d'électrodes (10), **caractérisée en ce que** les premiers prolongements (11ab, 121ab) des premier et deuxième ensembles d'électrodes (10), qui sont fixés à l'élément de collecte de courant (51, 52, 53, 54, 55) s'étendent dans des directions opposées.

2. Batterie (101, 102, 104) de la revendication 1, dans laquelle la zone non revêtue (11a) comprend un deuxième prolongement (11ac), le premier prolongement (11ab, 121ab) s'étendant dans une première direction et le deuxième prolongement (11ac) s'étendant dans une deuxième direction différente de la première direction.

3. Batterie (101, 102, 104) de la revendication 2, dans laquelle le deuxième prolongement (11ac) fait saillie à partir de l'électrode (11, 12) et le premier prolongement (11ab, 121ab) est basé sur une partie d'extrémité (E) du deuxième prolongement (11ac).

4. Batterie (101, 102, 104) selon la revendications 2 ou 3, dans laquelle l'élément de collecte de courant (51, 52, 53, 54, 55) est enfermé entre les premier (11ab, 121ab) et deuxième prolongements (11ac).

5. Batterie (101, 102, 104) selon l'une des revendications 2 à 4, dans laquelle le premier prolongement (11ab) d'au moins l'un des ensembles d'électrodes (10) s'étend vers le deuxième prolongement (11ac) de l'autre ensemble d'électrodes respectif (10).

6. Batterie (104) selon l'une des revendications 1 à 5, dans laquelle les premiers prolongements (121ab) se chevauchent de sorte qu'ils soient agencés l'un après l'autre lorsqu'ils sont vus à partir de l'électrode (11, 12).

7. Batterie (101, 102, 104) selon l'une des revendications 1 à 6, dans laquelle l'élément de collecte de courant (51, 52, 53, 54, 55) comprend une plaque latérale (513, 523, 533, 553) et une plaque de support (515, 525, 554, 574, 576), la plaque de support (515, 525, 554, 574, 576) s'étendant à partir de la plaque latérale (513, 523, 533, 553) et étant fixée au premier prolongement (11ab, 121ab).

8. Batterie (101) selon la revendication 7, dans laquelle la plaque de support (515, 525) chevauche la plaque latérale (513, 523) au moins dans le sens de la section.

9. Batterie (101) selon la revendication 7 ou 8, dans laquelle l'élément de collecte de courant (51, 52) est formé avec au moins une plaque de connexion (514, 524) qui relie la plaque latérale (513, 523) et la plaque de support (515, 525), la plaque latérale (513, 523) et la plaque de support (515, 525) étant agencées à une certaine distance l'une de l'autre de sorte qu'une section de l'élément de collecte de courant (51, 52) comprenne une section transversale en forme de J, où la plaque latérale (513, 523) et la plaque de support (515, 525) forment des sections parallèles de la section transversale en forme de J de l'élément de collecte de courant (51, 52).

10. Batterie (101, 102, 104) selon l'une des revendications 7 à 9, dans laquelle l'élément de collecte de courant (51, 52, 53, 54, 55) est formé avec deux plaques de support (515, 525, 554, 574, 576) qui chevauchent la plaque latérale (513, 523, 533, 553), les plaques de support (515, 525, 554, 574, 576) s'étendant l'une vers l'autre.

11. Batterie (104) selon la revendication 10, dans laquelle les deux plaques de support (574, 576) se chevauchent.

12. Batterie (104) selon la revendication 10 ou 11, dans laquelle le premier prolongement (121ab) est agencé entre les deux plaques de support (574, 576).

13. Batterie (102) selon l'une des revendications 7 à 12, dans laquelle l'élément de collecte de courant (53) est formé avec au moins deux plaques latérales (533) qui s'étendent à une certaine distance l'une de l'autre dans la même direction.
